# EUROPEAN PATENT APPLICATION

(11) **EP 3 593 627 A1**
(43) Date of publication of application: **15.01.2020**
(21) Application number: 19185919.8
(22) Date of filing: 12.07.2019
(51) Int. Cl.: A01F 15/07, B65H 23/00

(54) **CONSTANT TENSION MECHANISM OF TYING NET FOR ROLL BALES**

(30) Priority: 12.07.2018 AR P180101939
(71) Applicant: CARLOS MAINERO Y CIA S.A.I.C.F.I, 2550 Córdoba (AR)
(72) Inventor: MAINERO, Carlos Oscar, Córdoba (AR)
(74) Representative: Temiño Ceniceros, Ignacio

(57) **Abstract**

A constant tension mechanism of tying net for roll bales, that allows varying the stretching tension of the material in accordance with different diameters and thus provide a tying tension that allows keeping the geometry of the roll bale throughout time.

## Description

### STATE OF THE ART

### Field of the invention

The present invention refers to the field of machines, means or arrangements used in agroindustry, and more specifically to a mechanism for tying bales which, unlike conventional tying mechanisms, may vary the intensity in the tying tension according to any type of roll diameter, electronically, for the purpose of keeping tension constant while tying the rolls. Even when in this description reference is made to a mechanism for tying roll bales in round baler machines, it is made clear that the subject-matter of the present invention may be considered, adapted and used in any type of baler machine without any inconveniences.

### Description of the prior art

At present, it is widely known that bales are used to preserve crops intended for forage, which is cut and processed before drying, as a form of keeping its maximum nutritional performance. In general, round baler machines used for making bales comprise a forage collector arranged on a front and low portion of the round baler, a compaction chamber wherein the roll is formed and compacted, a wrapper that allows tying the roll to keep it with the desired geometry, and an end bale expulsion system.

This equipment is supplied with mechanical and hydraulic energy from an independent propelling vehicle such as a tractor, and the operation of the baler equipment is conducted from the tractor's cabin through mechanical elements or electronically. In these machines, a tying material provided with a mechanism associated with the bale is commonly used in the art of tying bales, and is introduced into the baler chamber from a source during the tying cycle. The tied material is cut by another mechanism at the end of the tying cycle, leaving the material ready for the next cycle.

Conventionally, the materials used for tying a bale into a roll are lightweight and thin, for which reason the shift in the inertia time in the material coil from where the feeding mechanism is supplied shows large variations from the initial condition of new coil to the final condition when the tying material coil is almost empty. Initially, the tying of bales was done with thread turns, and later on with plastic material in the form of a net, always being desirable that bales kept their cylindrical shape after being formed, for ease of transport, storage and conservation.

It is known in the art of tying bales into rolls that the tying is done by tensioning the tying material elastically for it to be adhered to the surface of the roll bale. As mentioned above, it is of utmost importance to keep the form of the roll bale to ease transport, storage and conservation. Keeping the shape of the roll bale depends on the tension employed in tying the roll. If the tension is not sufficient, the roll may break the tying material net due to the pressure exerted thereon, causing disintegration and subsequent loss. Although conventional tying mechanisms in practice have proven to work properly, those arrangements may still be improved, because the tension applied to stretch the mesh net that ties each roll bale is pre-set for the maximum diameter the roll can reach inside each baler machine, not being prepared for cases having diameter variations.

By reason of the above, it is convenient to have a new arrangement, device or machine that allows a variation in the stretching tension of the tying material, and consequently in the tying tension, so as to make the tying much more compact for any type of diameter, and ensure that the geometry of the roll bale is kept throughout time.

### BRIEF DESCRIPTION OF THE INVENTION

It is therefore an object of the present invention to provide a new constant tension mechanism of tying net for roll bales that allows varying the tying tension according to the roll's diameter.

It is a further object of the present invention to provide a tension mechanism that offers an electrically driven control arrangement.

It is a further object of the present invention to provide such electrically driven control arrangement that allows that during the start of the tying cycle and until the tying material enters the compaction chamber the tying material is applies without tension or forces contrary to the feeding.

It is a further object of the present invention to provide an electric control arrangement such that allows exerting a pressure regulated on the break and consequently on the turn of the tying material feeding coil, causing a tension necessary to obtain the recommended stretching of the tying material.

It is a further object of the present invention to provide a mechanism for tying bales into rolls that may comprise an electric break or a mechanical break.

It is yet a further object of the present invention to provide a mechanism that allows an adjustable constant tension adapted to any type of net for tying.

It is yet a further object of the present invention to provide a constant tension mechanism of tying net for roll bales, used in baler machines of the type having a chassis with side walls, a forage collector mechanism in communicating with a baler-compacting chamber provided with a formation mechanism, a tying arrangement having a net spool provided with a tying material and an expulsion arrangement for the formed and compacted bale, being the mechanism that comprises at least one sensing means in contact with a portion of the surface of the net spool provided in said tying arrangement; at least one sensor or turn collector connected to said sensing means; at least one electronic controller means operatively connected to said sensor or turns collector and to an electrical actuator connected to a break that, in turn, is connected to said net spool; and at least one corner sensor operatively connected to said electronic controller means.

### BRIEF DESCRIPTION OF THE DRAWINGS

For better clarifying and understanding, the present invention is illustrated in several figures that represent the invention in one of its preferred embodiments, by way of example, wherein:
Figures 1 to 4 show a partial and side cutaway view of a round baler wherein the constant tension tying mechanism of the present invention is arranged, showing the formation sequence of a roll bale;
Figure 5 shows a partial cutaway view of the inside of a tying arrangement within which the mechanism of the present invention is arranged;
Figure 6 shows a partial cutaway and side view of figure 5;
Figure 7 shows an enlarged view of a portion of the tying device according to the present invention; and
Figure 8 shows an enlarged view of another portion of the tying device according to the present invention.

### DETAILED DESCRIPTION OF THE INVENTION

Making now reference to the figures, it is observed that the invention consists on a new mechanism for tying bales into rolls, which allows varying the stretching tension of the material in accordance with different diameters and thus provide a tension that allows keeping the geometry of the roll bale throughout time.

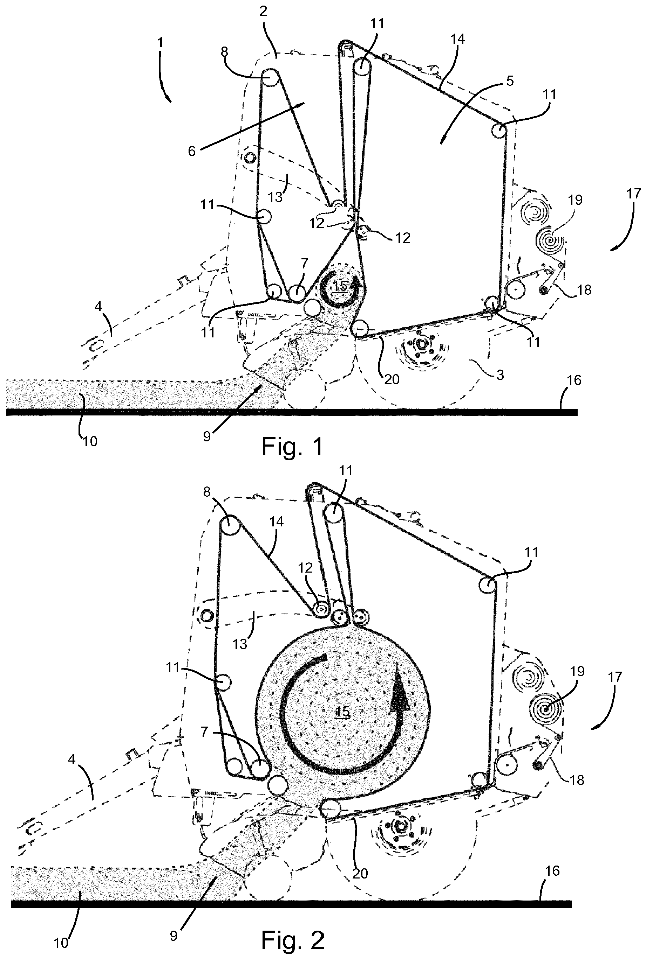

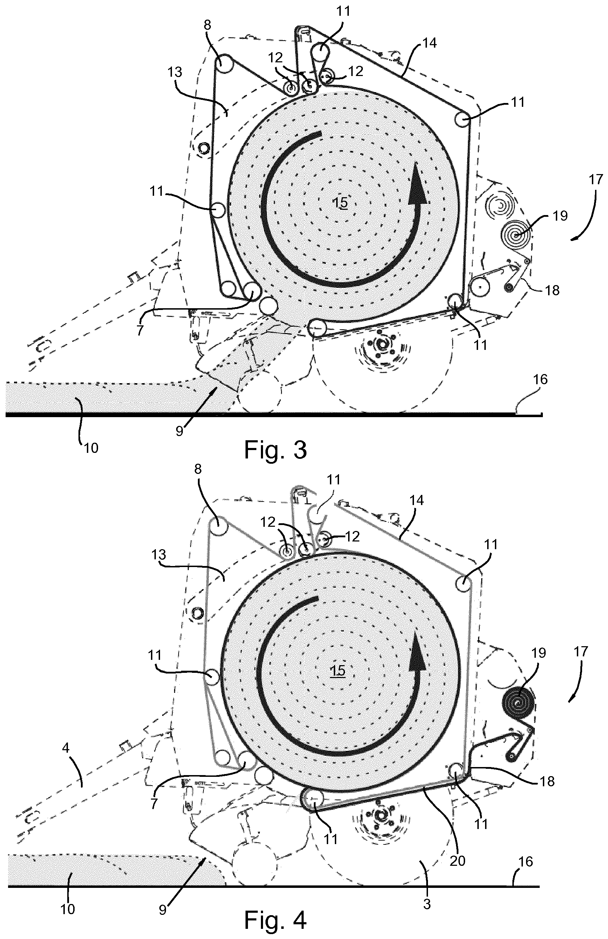

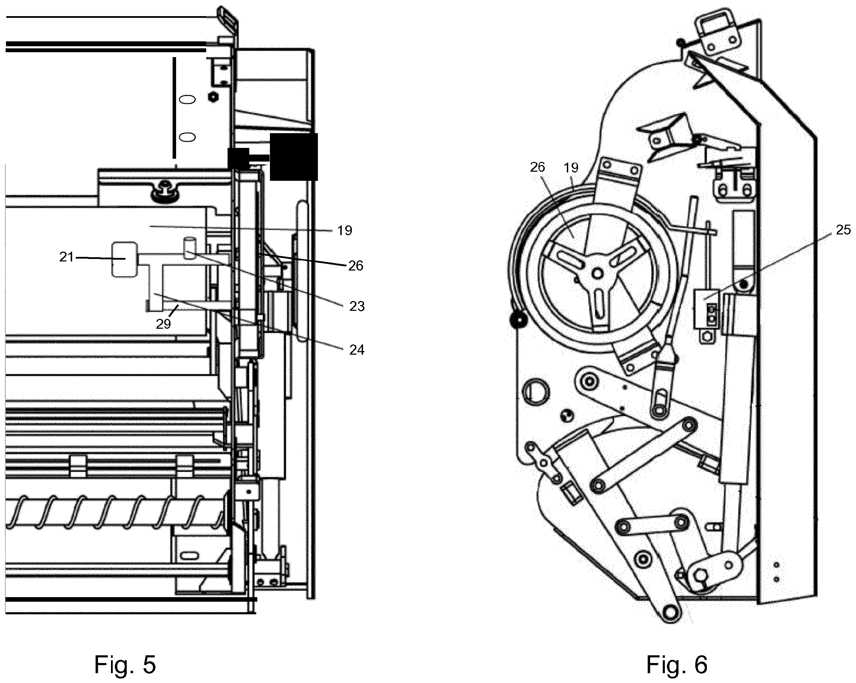

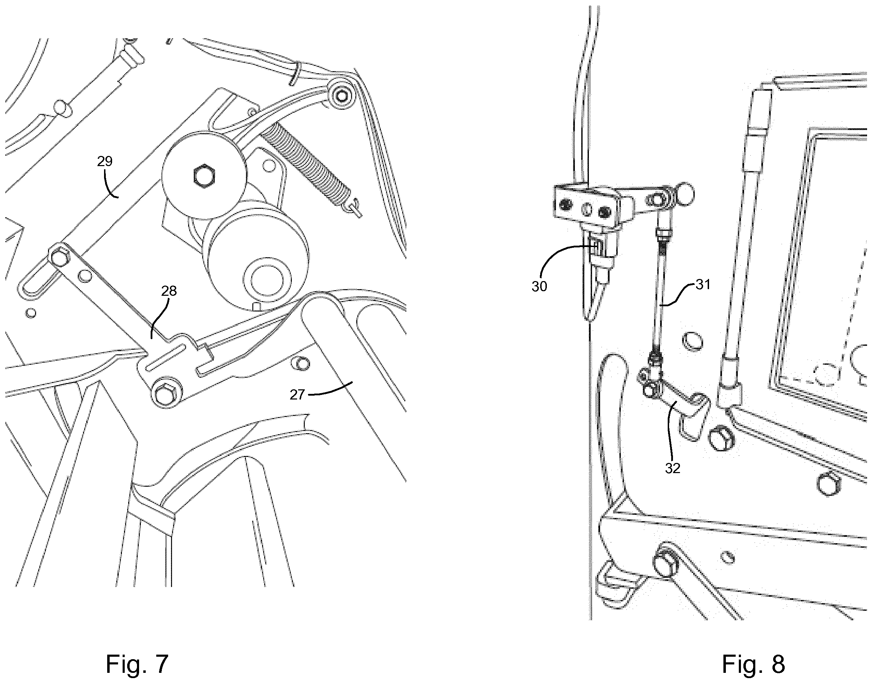

Thus, and according to figures 1 to 8, the constant tension mechanism of tying net for roll bales may be used in a round baler machine 1. In the case of the present invention, it was opted for illustrating a round baler, though this is not limiting for the invention, since the object hereof may be considered, adapted and used in different types of baler machines. The round baler machine 1 comprises a chassis that supports side walls 2 being supported for the transfer through a pair of wheels 3. A lance 4 protrudes towards the front of the chassis, from where a traction vehicle exerts the pulling force for the forward movement of the baler machine.

In turn, the side walls 2 are mutually parallel and each forms the limits of a baler-compacting chamber 5 that receives the material to compact through a forage collector mechanism or means 9 that takes the forage 10 from the ground and propels it towards the baler-compacting chamber 5, being its features and designs well known in the art, for which reasons no descriptive details are herein provided. The side walls have portions fixed to the chassis and articulated portions that allow it to pivot to rise and release the back area of the baler machine for extracting the already formed round bale.

Round baler machines have also a round bale formation mechanism 6 consisting on a plurality of rollers and flexible belts 14, described in more detail below. In general, these elements cooperate with the side walls and define the baler-compacting chamber that assumes different sizes and forms through the formation cycle of the round bale. This type of machines are called "variable belts chamber", wherein the baler chamber varies from a small size and quasi-triangular section at the beginning of the baler cycle to a maximum size and cylindrical volume at the end of the cycle, as it may be observed in the sequence illustrated in figures 1 to 4.

Said round bales formation mechanism 6 comprises a plurality of rollers extending laterally and are stationary in relation to the side walls of the structure, wherein such rollers comprise a lower traction roller 7, an upper traction roller 8 and a plurality of free-spinning rollers 11. Likewise, a free-spinning subgroup of rollers 12 is arranged, mounted on a tension arm 13 that pivots in the inner side of the machine to variate the trace of the belts 14 and the size and form of the compaction chamber 5 of the round bales.

Stationary rollers are distributed in a generally circular pattern, between the sides of the baler-compacting chamber, to guide the baler elements (belts 14) which are endless flexible belts linearly driven during the formation of the roll bale 15 and the tying thereof, which is not limiting for the invention because other types of configurations may exist, such as one single endless band, chains and bars, or a multiplicity of stationary rollers.

It is worth noting that a plurality of said belts 14 slacker arm 13 may be provided, which may be articulated in the upper part of the round baler machine and located adjacent on the sides of the baler-compaction chamber 5. As mentioned above, these slacker arms 13 hold the free-spinning rollers 12 in direct position over the round bale 15 during its formation. In addition, the slacker arms 13 are biased variably downwards for the rollers 12 to keep the pressure against the upper part of the round bale 15 in formation. In addition, the track of the endless flexible elements (belts 14) with the slacker arm 13 and cooperatively with the side walls 2 defines the baler-compacting chamber 5. In turn, the baler-compacting chamber 5 is open on its lower front part, and this opening is just on ground level 16 for the collection mechanism 9 to enter the forage 10 from the outside towards the baler chamber 5 while the machine 1 slides across the field.

Moreover, it is worth noting that the power needed to pull the elements in the round baler machine may be supplied from the tractor vehicle through a rotary drive bar, connected to a transmission box located on the chassis of the machine, this being well known and used in the art and therefore no descriptive details are provided in relation thereto. The transmission box is connected through gears, toothed wheels and chains to several rotation elements of the baler apparatus.

Once the round bale 15 reaches its maximum diameter, as it is known in the art of keeping forage, it is desirable that it be tied fixedly before being extracted from the machine. To such end, the baler machine 1 has a tying device 17 for tying the round bales that, in general, has the capacity of tying bales which are not fully formed. Wherein, said tying device 17 is on the lower back area of the round baler 1, causing a tying material 18 to be transferred from a net spool 19 provided in said tying device 17 to the entry of the baler chamber 5 located on the lower front part of the machine 1 before the finished round bale 15 may be wrapped. The net spool 19 is provided with the corresponding tying material to carry out the tying of the roll bale. The tying material may be any material well known in the art, and that serves the practical purpose of the tying process.

The invention is provided with a tray 20 extending generally from the back lower free roller 18 to the front lower free roller 18 of the discharge gate, that forms the entry of the baler-compacting chamber, and is located slightly below the track of the belts 14 between these two rollers, so that the tying material 18 is transported along the tray 20. Moreover, and according to one of the advantages of the present invention, said tying device 17 comprises at least one sensing means 21 in contact with a portion of the net spool 19 surface provided in said tying arrangement 17 and comprising a radius sensor the axis 22 of which is in contact with a turns collector 23, and is supported by an end of a diameter rocker arm 24. In turn, at least one electronic controller means (not shown) is provided, operatively connected to said sensor or turns collector 23 and to an electrical actuator 25 which is connected to a brake 26 which, in turn, is connected to said net spool 19. The brake 26 may be a mechanical brake, while said electronic controller means is an arrangement of closed loop control with sensor signals management and of action signals over the brake arrangement, that may be mechanical or electrical, being the control arrangement comprised by cabling, electronic board nodes and a screen to display and enter data.

On the other hand, the mechanism of the invention shows at least one net stretching bar 27 connected to a rocker arm 28 which is connected to a support bar 29 that supports said diameter rocker arm 24. Moreover, it is provided at least one corner sensor 30 operatively connected to said electronic controller means and a vertical bar 31 articulately connected to a lever 32. Wherein, said lever 32 is connected to said net stretching bar 27.

Thus, after the bale is formed and the tying material 18 (net mesh) is inside the baler-compacting chamber 5, a signal is sent from the radius sensor 21 to the collector 23 and the electronic controller activates the electrical actuator 25 that exerts pressure on the brake 26 and thereafter on the turn of the net spool 19. Through the strength exerted by the brake 26 and the traction generated by the tying material deposited on the surface of the roll bale that keeps spinning around, the necessary tension for tying the roll bale is achieved. The magnitude of the actuation signal of the electrical actuator 25 also depends on the radius value of the feeding coil, that is registered by the arrangement through the corner sensor 30, activated by the vertical bar 31 and lever 32, which react jointly to the change of radius of the feeding coil through the stretching bar 27, combined with the corresponding radius sensor 21 and rocker arm 28 - bar 29. That is to say, the radius sensor 21 constantly senses the surface of the net spool. Upon a change in the coil's diameter, the collector sends a signal to the electronic controller so that this latter activates the electrical actuator 25 and this latter exerts a pressure on the brake 26. Simultaneously, upon a variation in diameter, the radius sensor 21 supported by the diameter rocker arm 24 causes this latter to move in a manner such that the support bar 29 moves to the set formed by the rocker arm 28 - stretching bar 27 - lever 32 - vertical bar 31 - corner sensor 30, the variation on the sensing corner being captured by the sensor 30, which shall also send a signal to the electronic controller to thus improve further the precision on the activation of the electrical actuator 25 so that it exerts a suitable force/pressure on the brake 26 and this latter on the net spool 19 so that the tension in the stretching of the tying material be suitable and consequently, the tying tension be proper. At the conclusion of the roll's tying, the material is cut and unloaded on the ground raising the respective pivotal walls, emerging backwards facing towards the forward sense of the machine of Figure 1.

The constant tension tying mechanism of baler machines for roll bales of the present invention is thus created and constructed, which thanks to the mechanism or electronic arrangement jointly with the mechanical arrangement mentioned above, allows to regulate the stretching tension of the tying material in accordance with the different roll diameters, so as to, consequently, provide a suitable tying tension that keeps the geometry of the roll throughout time.

Although, the composition of the round baler's structure or its operation has not been described in detail, it is understood that any person with ordinary knowledge in the field would not have trouble understanding that the invention is focused on the mechanism to carry out the tying of the roll bale, being the parts and the operation of the baler machine for the formation of the roll therein, in general, widely known in the art.

## Claims

1. A constant tension mechanism of tying net for roll bales, used in baler machines of the type having a chassis with side walls, a forage collector mechanism communicated with a baler-compacting chamber provided with a formation mechanism, a tying arrangement having a net spool provided with a tying material and a formed and compacted bale expulsion arrangement, being the mechanism **characterized in that** it comprises:
at least one sensing means in contact with a portion of the surface of the net spool provided in said tying arrangement;
at least one sensor or turns collector connected to said sensing means;
at least one electronic controller means operatively connected to said sensor o turns collector and to an electrical actuator connected to a break that, in turn, is connected to said net spool; and
at least one corner sensor operatively connected to said electronic controller means.

2. A constant tension mechanism of tying net in accordance with claim 1, **characterized in that** said sensing means is a radius sensor the axis of which is in contact with the turns collector, and is supported by an edge of a diameter rocker arm.

3. A constant tension mechanism of tying net in accordance with claim 1, **characterized in that** said corner sensor is connected to a vertical bar that is articulately connected to a lever.

4. A constant tension mechanism of tying net in accordance with any of the above claims, **characterized in that** a net stretching bar is provided connected to said lever and to a rocker arm that is connected to a support bar that supports said diameter rocker arm.

5. A constant tension mechanism of tying net in accordance with claim 1, **characterized in that** said brake is an electronic brake.

6. A constant tension mechanism of tying net in accordance with claim 1, **characterized in that** said brake is a mechanical brake.
